# EUROPEAN PATENT SPECIFICATION

(11) **EP 2 525 556 B1**
(45) Date of publication and mention of the grant of the patent: **25.03.2015**
(21) Application number: 12167939.3
(22) Date of filing: 14.05.2012
(51) Int. Cl.: H04M 3/56, G06F 3/048

(54) **Method and apparatus for switching call mode**
Verfahren und Vorrichtung zur Schaltung eines Anrufmodus
Procédé et appareil de commutation de mode d'appel

(30) Priority: 16.05.2011 KR 20110045834
(43) Date of publication of application: 21.11.2012
(73) Proprietor: Samsung Electronics Co., Ltd., Suwon-si, Gyeonggi-do, 443-742 (KR)
(72) Inventor: Park, Sun Young, 443-742 Gyeonggi-do (KR); Kim, Jeong Hyo, 443-742 Gyeonggi-do (KR); Um, Tae Won, 443-742 Gyeonggi-do (KR); Jong, In Won, 443-742 Gyeonggi-do (KR); Kim, Yu Sic, 443-742 Gyeonggi-do (KR)
(74) Representative: Jenkins, Richard Gavin

(56) References cited:
- US-A1- 2008 059 888
- US-A1- 2008 168 361

## Description

### BACKGROUND OF THE INVENTION

### Field of the Invention

The present invention relates to a method and an apparatus for switching a call mode, and more particularly, to a method for switching a terminal to a private call mode during a conference call, and an apparatus thereof.

### Description of the Related Art

With the development of communication technology, most persons readily uses a mobile phone. One of a variety of utilization schemes of the mobile terminal is a conference call, which provides a multi-to-multi call scheme as wall as a one-to-on call scheme.

However, during a conference call, the user may feel need to conduct a private call with one of the conference call attendees. For example, while performing a conference call with a call counterpart A and a call counterpart B, if a user wants to talk with only the call counterpart B due to security or other reasons, there is no means of making such a private call.

Accordingly, there is a need enable a user rapidly and conveniently switch between the conference call and a private call during connection with multiple parties.

US2008/168361 discloses a portable device having a phone call user interface that includes a merge call icon for merging an active phone call and a suspended phone call.

US2008/059888 discloses a method for reconfiguring a GUI interface associated with a communication device operable in different modes. The method uses an orientation sensing mechanism which senses whether the device is in a portrait or a landscape orientation.

### SUMMARY OF THE INVENTION

The present invention has been made in view of the above problems, and provides an apparatus for conveniently switching a call mode and a method thereof.

In accordance with an aspect of the present invention, a method of switching during a call mode in a mobile terminal includes: providing a conference call; providing a switch interface for switching to a private call including a call counterpart list corresponding to counterparts of the conference call when an orientation of the mobile terminal changes to a landscape orientation during the conference call; and providing a private call connection with a call counterpart corresponding to a selected item when one item is selected from the call counterpart list.

In accordance with an aspect of the present invention, a mobile terminal includes: an input unit for receiving a conference call input and a private call switch input of a user; a direction sensing unit for sensing an orientation of the mobile terminal; a radio frequency communication unit for transmitting and receiving data related to a call; a display unit for displaying a user interface screen; and a controller for providing a conference call, and for providing a switch interface for switching to a private call including a call counterpart corresponding to counterparts of the conference call when the direction sensing unit senses that the orientation of the mobile terminal changes to a landscape orientation during the conference call, and providing a private call connection with a call counterpart corresponding to a selected item when one item is selected from the call counterpart list.

An embodiment of the present invention has an effect that may provide an apparatus for conveniently switching a call mode and a method thereof.

### BRIEF DESCRIPTION OF THE DRAWINGS

The above features and advantages of the present invention will be more apparent from the following detailed description in conjunction with the accompanying drawings, in which:
FIG. 1 is a block diagram illustrating a configuration of a terminal switching a call mode according to an exemplary embodiment of the present invention;
FIG. 2 is a flowchart illustrating a method for switching a call mode according to an embodiment of the present invention;
FIG. 3 illustrates variations in an interface screen according to an embodiment of the present invention; and
FIG. 4 illustrates a process of switching a second screen from a conference call state to a call stop state and a private call state according to an exemplary embodiment of the present invention.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims.

In the specification, the term "conference call" refers to a call scheme that a user simultaneously calls with at least two other users. As used herein, the term "private call" refers to a call scheme that a user calls with another user.

It is assumed in the specification that user input is received in such a way that a touch screen receives tap input. However, the tap input may be substituted by key pad input or other touch inputs. The tap input represents an operation of touching a touch screen by a user within a preset time period.

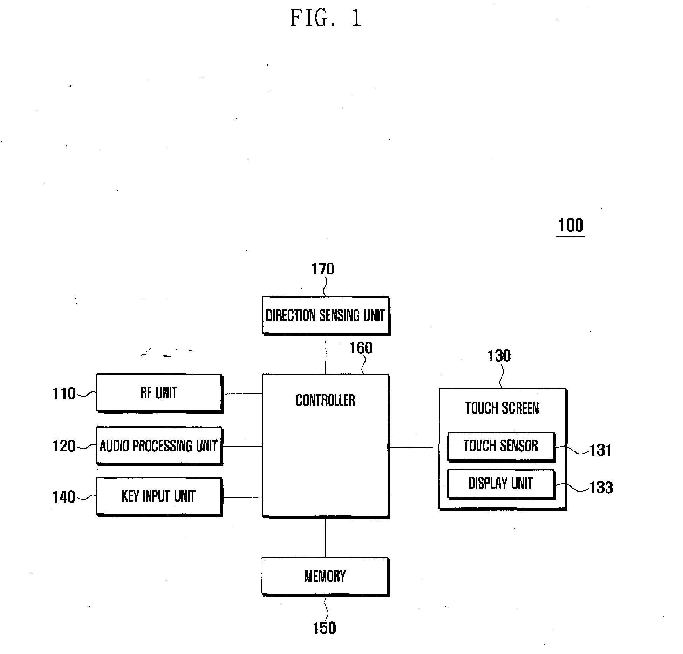

FIG. 1 is a block diagram illustrating a configuration of a terminal 100 switching a call mode according to an exemplary embodiment of the present invention. As shown, the terminal 100 according to an embodiment of the present invention may include a radio frequency (RF) unit 110, an audio processing unit 120, a touch screen 130, a key input unit 140, a memory 150, a controller 160, and a direction sensing unit 170.

The RF communication unit 110 performs transmitting and receiving functions of corresponding data for RF communication of the terminal 100. The RF communication unit 110 may include a transmitter (not shown) up-converting a frequency of a transmitted signal and amplifying the signal, a receiver (not shown) low-noise-amplifying a received signal and down-converting the signal. Further, the RF communication unit 110 receives data through an RF channel and outputs the received data to the controller 160. The RF communication unit 110 may transmit data output from the controller 160 through the RF channel. The RF communication unit 110 may perform communication suited to a conference call or a private call under the control of the controller 160.

During the conference call, a signal must be set such that a transmission signal of the terminal 100 may be transferred to all counterparts participated in the conference call. Meanwhile, during the private call, a signal must be set such that a transmission signal of the terminal 100 is transferred to only one selected counterpart. Here, the RF communication unit has been described by way of example when RF communication is performed. However, the RF communication unit 110 may be appreciated to be a communication unit performing general communication. In a case of a terminal performing wired communication, a wired communication unit performing wired communication must be included instead of the RF communication unit 110.

The audio processing unit 120 may be configured by a CODEC. The CODEC may include a data CODEC processing packet data and an audio CODE processing an audio signal. The audio processing unit 120 converts a digital audio signal into an analog audio signal using the audio CODEC, and plays the analog audio signal using a speaker SPK. The audio processing unit 120 converts an analog audio signal input from a microphone MIC into a digital audio signal using the audio CODEC.

In the embodiment, the input unit generally expresses means receiving and transferring user input to the controller. The input unit may receive a conference call input and a private call switch input. The input unit may be implemented by a form of a touch sensor 131 and/or a key input unit 140.

The touch screen 130 includes a touch sensor 131 and a display unit 133. The touch sensor senses the touch input of a user. The touch sensor 131 may be configured by a touch sensor such as a capacitive overlay type, a resistive overlay type, an infrared beam type or a pressure sensor. In addition to the foregoing sensors, the touch sensor 131 may be configured by various other types of sensor device capable of sensing a contact or pressure of an object. The touch sensor 131 senses the touch input of a user to generate a sensing signal in order to transmit the generated sensing signal to the controller 160. The sensing signal contains coordinates data that a user input a touch. When the user inputs a touch location moving operation, the touch sensor 131 generates and transmits a sensing signal having coordinates data of a touch location moving path to the controller 160. In particular, the touch sensor 131 may sense and receive the conference call input and the private call switch input according to an embodiment of the present invention.

The display unit 133 may be configured by a Liquid Crystal Display (LCD), an Organic Light Emitting Diode (OLED), or an Active Matrix Organic Light Emitting Diode (AMOLED). The display unit 132 visibly provides a menu of the terminal 100, input data, function setting information, and a variety of other information to a user. The display unit 133 executes a function outputting a booting screen, an idle screen, a menu screen, a call screen, and other application screens of the terminal 100. In particular, the display unit 133 may display a user interface screen according to the present invention.

The terminal 100 of the present invention may be configured to include the touch screen as illustrated previously. However, it should be noticed that an embodiment of the present invention is not applied to only a terminal 100 with the touch screen 130. When the teachings of the present invention is applied to a terminal without the touch screen, the touch screen 130 shown in FIG. 1 may be modified and applied to execute only a function of the display unit 133.

The key input unit 140 receives a key operation of a user for controlling the terminal 100, and generates and transfers an input signal to the controller 160. The key input unit 140 may be configured by either a key pad including numeral keys and arrow keys or a predetermined function key provided at one side of the terminal 100. In the embodiment of the present invention, the key input unit 140 may be omitted in a terminal capable of performing all operations by only the touch screen 130. The key input unit 140 may sense and receive a conference call input and a private call switch input according to an embodiment of the present invention.

The memory 150 may store programs and data necessary for an operation of the terminal, and be divided into a program area and a data area. The program area may store a program controlling an overall operation of the terminal 100, an operating system (OS) booting the terminal 100, an application program necessary for playback of multimedia contents, or other option functions of the terminal 100 such as a camera function, a sound playing function, or an image or moving image playing function. The data area stores data created according to use of the terminal 100, for example, images, moving images, phone-books, and audio data.

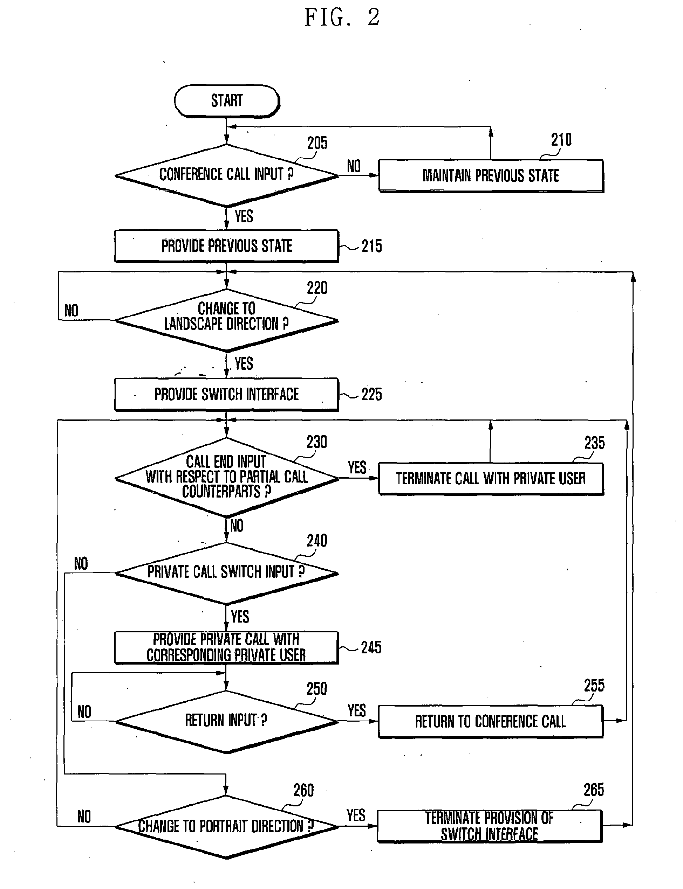

The controller 260 controls an overall operation with respect to respective structure elements. For example, when receiving conference call input through the touch sensor 131 or the key input unit 140, the controller 160 provides a conference call. If the direction sensing unit 170 senses that a direction of the terminal changes from a portrait direction to a landscape direction, the controller 160 may control the display unit 133 and an input unit (key input unit 140 and/or touch sensor 131) to provide a switch interface capable of switching to a private call with one of the counterparts during the conference call. A concrete operation of the controller 160 will be described with reference to FIG. 2 to FIG. 4 in detail.

FIG. 2 is a flowchart illustrating a method for switching a call mode according to an embodiment of the present invention.

In operation, a controller 160 determines whether a conference call input is received through an input unit (205). The conference call input generally refers to input requesting or approving conference call. For example, if an RF communication unit 110 receives a call request of a conference call from another terminal, the controller 160 may output a screen inquiring whether to approve a conference call request to the display unit 133. A user may input an input corresponding to approval or rejection through a key input unit 140 and/or a touch sensor 131 (key input 141 and touch sensor 131 generally refer to 'input unit' in total, hereinafter).

In an alternate embodiment, a user may select some of phone numbers in a phone book though the input unit to input an operation command instructing a conference call with respect thereto. In another modified embodiment, the user may select a phone number in the phone book during a private call to input an operation command instructing a conference call with respect to a current call counterpart and the selected phone number. Input starting a conference call is diverse according to embodiments and is a known technology, and thus a detailed description thereof is omitted.

When the input unit receives conference call input, the terminal 100 provides a conference call (215). Conversely, when the input unit does not receive the conference call input, the terminal 100 maintains a previous state (210). For example, when the terminal 100 is in an idle state, it may maintain the idle state. When the terminal 100 is in a private call state, it may maintain the private call state.

The controller 160 provides the conference call (215). That is, the controller 160 provides a call with plural counterparts to the user.

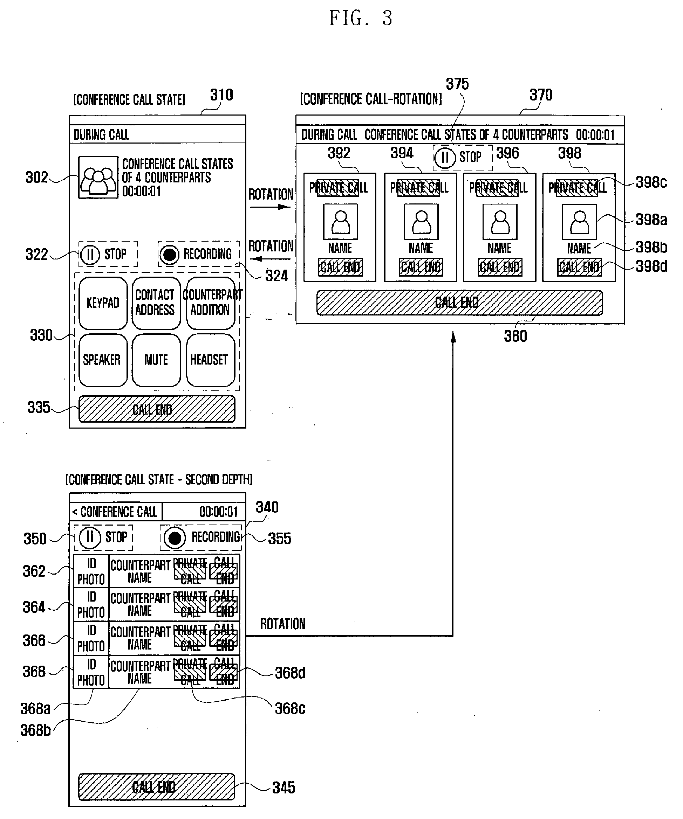

FIG. 3 is a view illustrating variation in an interface screen according to an embodiment of the present invention.

When the controller 160 provides a conference call at step 215 of FIG.2, an interface such as a first screen 310 may be provided. The first screen 310 includes a counterpart list button 320, a stop button 322, a recording button 324, other menus 330, and an entire call end button 335. However, the first screen 310 does not include ID information of a call counterpart, and an interface advancing to a private call of a call counterpart or a private call of some of call counterparts.

When the terminal 100 rotates to a landscape direction while an interface of the first screen 310 is provided, the terminal 100 may provide an interface of the second screen. If input of the counterpart list button 320 is sensed on the first screen 310, the terminal 100 may provide an interface of a third screen 340. If the user taps a stop button 322, a conference call with all counterparts may temporarily stop. If a user taps a recording button 324, recording to call contents may start. If the user taps an entire call end button 335, a conference call with all counterparts may be terminated. If the user also taps the entire call end button 335 or a button corresponding thereto in any step, the conference call with all counterparts may be terminated. It may be confirmed that an entire call end button exists on another interface screen. If the user selects one of the menus 330, a corresponding function may be executed.

The third screen 340 includes a stop button 350, a recording button 355, an entire call end button 345, and call counterpart lists 362, 364, 366, and 368. A fourth item 368 of the call counterpart lists includes ID information of other call counterparts, a private call button 368c, and a call end button 368d. For example, the ID information of the other call counterparts may include ID photo 368a of the call counterpart and a name 368b of the call counterpart. Other items 362, 364, and 366 of the other call counterpart lists include ID information, a private call button, and a call end button of each call counterpart. The call counterpart lists may be displayed in a list form by horizontally dividing a screen of the terminal.

If the user taps a private call button 368ca on the third screen 340, a call with counterparts corresponding to remaining call counterpart items 362, 364, 366 temporarily stops, and a private call with a call counterpart corresponding the call counterpart item 368 starts. Next, a user may return to the conference call with respect to the call items 362, 364, 366, and 368 according to return input. If the user taps a call end button 368d on the third screen 340, a call with a call counterpart corresponding to the call counterpart item 368 is terminated. A conference call with counterparts corresponding to remaining call counterpart items 362, 364, and 366 may maintain. If the user taps a stop button 350, a conference call with all counterparts may temporarily stop. If the user taps the recording button 355, recording to call contents may start. If the user taps the entire call end button 345, a conference call of all counterparts may be determined.

While the controller 160 is providing the conference call, a direction sensing unit 170 determines whether a direction of the terminal changes from a portrait (vertical) direction to a landscape (horizontal) direction (220). The direction sensing unit 170 may determine whether the terminal is provided at the landscape direction or the portrait direction from a landscape direction using a gravity sensor or other sensors. A direction sensing method of the terminal 100 is a known technology, and thus a detailed description thereof is omitted.

If it is sensed that the direction of the terminal changes to the landscape (horizontal) direction, the controller 160 provides a switch interface (225). A second screen 370 of FIG. 3 is an example of the switch interface.

The second screen 370 includes a stop button 375, a call end button 380, and call counterpart lists 392, 394, 396, and 398. A fourth item 398 of the call counterpart lists includes call counterpart ID information, a private call button 388c, and a call button 389d. The call counterpart ID information may include a photo 398a of a call counterpart and a name 398b of a call counterpart. Other items 392, 394, and 396 of the call counterpart lists include ID information of a call counterpart, a private call button, and a call end button. Here, the photo 398a of a call counterpart and the name 398b of the call counterpart are presented as examples of the call counterpart ID information. However, other information (phone number, etc.) capable of discriminating a call counterpart may be used instead of the photo and the name or together with the photo and the name. In the embodiment of the present invention, a call end button 398b with respect to a private counterpart may be omitted.

If the user taps the call end button 380, a conference call with all counterparts may be terminated.

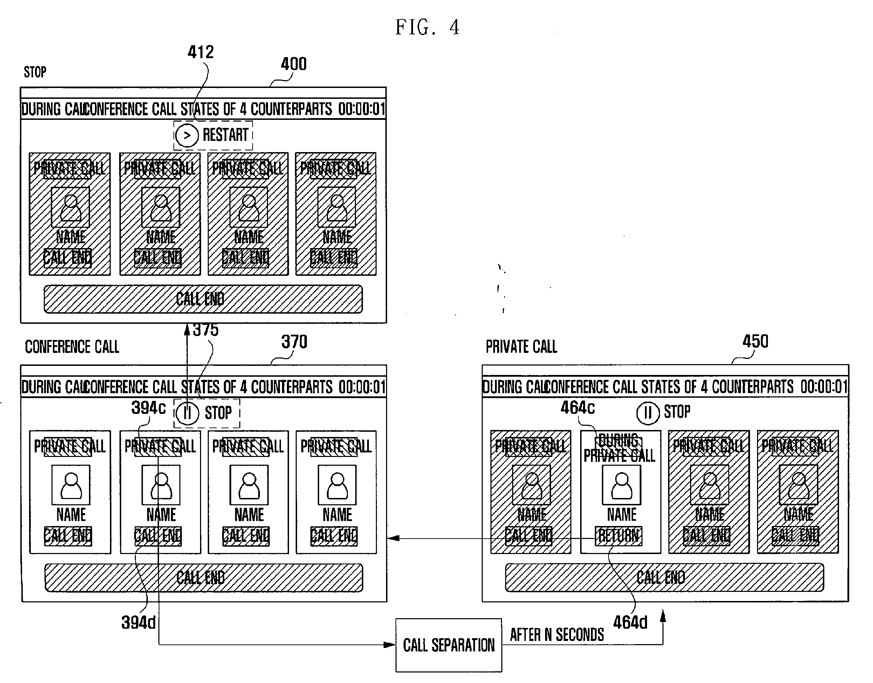

FIG. 4 is a flowchart illustrating a procedure of switching a second screen 370 from a conference call state to a call stop state and a private call state according to an exemplary embodiment of the present invention.

In FIG. 4, when the input unit receives input of a stop button 375 of the second screen 370, a call is stopped and respective items of the call counterpart list may be displayed darkly as illustrated on a fourth screen 400. The user may tap a restart button 412 to return to a conference call state of the second screen 370.

Referring back to FIG. 2, the terminal provides a switch interface such as the second screen 370 and then the process proceeds to step 230. The controller 160 determines whether call end input with respect to partial call counterparts is received (230). When the call end input with respect to the partial call counterparts is received, a call with a corresponding call counterpart (private) is terminated (235). The process proceeds to step 230 and a conference call with remaining call parities maintains. However, if there is one remaining call counterpart, the terminal becomes a private call state other than a conference call state based on definition of a term of a conference call. When call end input with respect to partial call counterparts is not received, the process proceeds to step 240.

For example, a call end input with respect to partial call counterparts is input that taps a call end button (394a of FIG. 4 or 398d of FIG. 3). If the user taps the call end button 394d, a call with a call counterpart corresponding to a second call counterpart item 394 is terminated. A conference call with remaining call counterparts corresponding to remaining call counterpart items 392, 396, and 398 maintains.

The controller 160 determines whether private call switch input is received (240). For example, the private call switch input is input that taps a private call button 394c of FIG. 4 or 398c of FIG. 3. When receiving the private call switch input, the controller 160 provides a private call connection with a corresponding private counterpart (245). That is, if a user taps the private call button 394c, a conference call is temporarily stopped and a private call connection with a call counterpart corresponding to a second call counterpart item 394 starts. When the private call starts, the controller 160 controls the display unit 133 and the input unit to provide an interface of a fourth screen 450.

An item corresponding to a private call counterpart on the fourth screen 450 includes a message 464c and a return 464d indicating a private call state in place of the private call button 394c and the call end button 494d. An item corresponding to remaining conference call counterparts except for the private call counterpart is darkly displayed. This represents that the current call with a darkly displayed call counterpart is stopped.

The controller 160 determines whether an input unit receives return input (250). Until the input unit receives the return input, step 250 repeats to continuously provide the private call. If the input unit receives the return input, the process returns to the conference call (255). For example, the return input is input that tap as a return button 464d by a user. The user may tap the return button 464d to terminate a private call and return to the conference call state. If the user taps the return button 464d, the controller 160 terminates the provision of the private call connection and provides the conference call, and controls the display unit 133 and the input unit to change the provided interface to an interface of the second screen 370.

If the input unit does not receive a private call switch input at step 240, the process proceeds to step 260.

The direction sensing unit 170 determines whether a direction of the terminal changes from a landscape direction to a portrait direction (260).

When the direction of the terminal changes from a landscape direction to a portrait direction, the controller 160 terminates the provision of a switch interface and returns to an interface such as the first screen 310 of FIG. 3 (265). Next, if the direction of the terminal changes to the landscape direction, the foregoing step of providing the switch interface is performed in the same manner in the foregoing description of step 225. When the direction of the terminal does not change, the process returns to step 230 to repeat step 230 to step 260.

It is unnecessary to perform steps 230, 240, and 260 in an order of FIG. 2. That is, the order of steps 230, 240, and 260 may be changed or steps 230, 240, and 260 may be performed in parallel.

In this case, it will be appreciated that respective blocks of processing flowcharts and a combination thereof may be performed by computer program instructions. Since computer program instructions may be mounted in a processor of a universal computer, a special computer or other programmable data processing equipment, instructions performed through a processor of a computer or other programmable data processing equipment generates means for performing functions described in block(s) of the flowcharts. Since the computer program instructions may be stored in a computer available or computer readable memory capable of orienting a computer or other programmable data processing equipment to implement functions in a specific scheme, instructions stored in the computer available or computer readable memory may produce manufacturing articles involving an instruction means executing functions described in block(s) of flowcharts. Because the computer program instructions may be mounted on a computer or other programmable data processing equipment, a series of operation steps are performed in the computer or other programmable data processing equipment to create a process executed by the computer such that instructions performing the computer or other programmable data processing equipment may provide steps for executing functions described in block(s) of flowcharts.

Further, each block may indicate a part of a module, a segment, or a code including at least one executable instruction for executing specific logical function(s). It should be noted that several execution examples may generate functions described in blocks out of an order. For example, two continuously shown blocks may be simultaneously performed, and the blocks may be performed in a converse order according to corresponding functions.

As used in this embodiment, the term "∼ unit" refers to software or a hardware structural element such as FPGA or ASIC, and the "∼ unit" perform some roles. However, the "∼ unit" is not limited to software or hardware. The "∼ unit" can be configured to be stored in an addressable storage medium and to play at least one processor. Accordingly, for example, the "∼ unit" includes software structural elements, object-oriented software structural elements, class structural elements, task structural elements, processes, functions, attributes, procedures, subroutines, segments of a program code, drivers, firmware, microcode, circuit, data, database, data structures, tables, arrays, and variables. Functions provided in structural elements and "∼ units" may be engaged by the smaller number of structural elements and "∼ units", or may be divided by additional structural elements and "∼ units". Furthermore, structural elements and "∼ units" may be implemented to play a device or at least one CPU in a security multimedia card.

A terminal 100 according to an embodiment of the present invention may be one of portable electronic devices such as a Personal Digital Assistant (PDA), a navigation system, a digital broadcasting receiver, and a Portable Multimedia Player (PMP).

While the invention has been shown and described with reference to certain exemplary embodiments thereof, it will be understood by those skilled in the art that various changes in form and details may be made therein without departing from the scope of the invention as defined in the appended claims.

## Claims

1. A method for switching during a call mode in a mobile terminal (100), the method comprising:
providing a conference call (215);
providing (225) a switch interface (370) for switching to a private call, the switch interface (370) including a call counterpart list (392-398) corresponding to counterparts of the conference call when an orientation of the mobile terminal (100) changes to a landscape orientation during the conference call (220); and
providing (245) a private call connection with a call counterpart corresponding to a selected item from the call counterpart list (392-398).

2. The method of claim 1, wherein providing (225) a switch interface (370) comprises displaying the call counterpart list (392-398) including identification information (398a, 398b) of the counterparts of the conference call and at least one switch button (398c) switching the mobile terminal (100) to a private call mode with one of the counterparts of the conference call.

3. The method of claim 2, wherein providing (245) the private call connection comprises providing the private call connection with the call counterpart corresponding to the switch button (398c) that received an input tap (240).

4. The method of claim 3, further comprising returning (255) the mobile terminal (100) to a conference call state when the mobile terminal (100) receives a return input (250) while providing the private call connection.

5. The method of claim 1, wherein the call counterpart list (392-398) is displayed in a list form horizontally dividing a screen of the mobile terminal (100).

6. The method of claim 5, wherein the call counterpart list (392-398) comprises identification information (398a, 398b) of the counterparts of the conference call, a switch button (398c) switching the mobile terminal (100) to a private call mode with one of the counterparts of the conference call, and an end button (398d) terminating the private call connection with one of the counterparts of the conference call.

7. The method of claim 1, further comprising stopping (265) a provision of the switch interface (370) when the orientation of the mobile terminal (100) changes from the landscape orientation to a portrait orientation (260).

8. A mobile terminal (100) comprising:
an input unit (131,140) for receiving a request for a conference call input (205) and a private call switch input (240);
a direction sensing unit (170) for sensing (220,260) an orientation of the mobile terminal (100);
a radio frequency communication unit (110) for transmitting and receiving data;
a display unit (133) for displaying a user interface; and
a controller (160) for providing a conference call (215), and for providing (225) a user interface (370) for switching to a private call state during a conference call state, the user interface (370) including a call counterpart list (392-398) corresponding to counterparts of the conference call when the direction sensing unit (170) senses (220) that the orientation of the mobile terminal (100) changes to a landscape orientation during the conference call, and providing (245) a private call connection with a specific call counterpart corresponding to a selected item from the call counterpart list (392-398).

9. The mobile terminal (100) of claim 8, wherein the controller (160) displays the call counterpart list-(392-398) including identification information (398a,398b) of the counterparts of the conference call and a switch button (398c) switching the mobile terminal (100) to the private call state with one of the counterparts of the conference call.

10. The mobile terminal (100) of claim 9, wherein the controller (160) provides (245) the private call connection with the call counterpart corresponding to the switch button (398c) that has been activated.

11. The mobile terminal (100) of claim 10, wherein the controller (160) returns (255) the mobile terminal (100) to the conference call state when the input unit (131,140) receives a return input (250) during the private call state.

12. The mobile terminal (100) of claim 8, wherein the call counterpart list (392-398) is displayed in a list form horizontally dividing a screen of the mobile terminal (100).

13. The mobile terminal (100) of claim 12, wherein the call counterpart list (392-398) comprises identification information (398a, 398b) of the counterparts of the conference call, a switch button (398c) switching the mobile terminal (100) to the private call connection with one of the counterparts of the conference call, and an end button (398d) terminating (235) the private call connection with one of the counterparts of the conference call.

14. The mobile terminal (100) of claim 8, wherein the controller (160) stops (265) a provision of the switch interface (370) when the direction of the mobile terminal (100) changes from the landscape orientation to a portrait orientation (260).

## Patentansprüche

1. Verfahren zum Umschalten während eines Anrufmodus in einem mobilen Endgerät (100), wobei das Verfahren Folgendes umfasst:
Bereitstellen einer Konferenzschaltung (215);
Bereitstellen (225) einer Umschaltschnittstelle (370) zum Umschalten auf ein Privatgespräch, wobei die Umschaltschnittstelle (370) eine Anrufgesprächspartnerliste (392-398) umfasst, die Gesprächspartnern der Konferenzschaltung entspricht, wenn eine Ausrichtung des mobilen Endgeräts (100) während der Konferenzschaltung (220) in ein Querformat wechselt; und
Bereitstellen (245) einer Privatgesprächsverbindung mit einem Aufrufgesprächspartner, der einem ausgewählten Eintrag aus der Anrufgesprächspartnerliste (392 bis 398) entspricht.

2. Verfahren nach Anspruch 1, wobei das Bereitstellen (225) einer Umschaltschnittstelle (370) Folgendes umfasst: Anzeigen der Anrufgesprächspartnerliste (392 bis 398), die Identifikationsinformationen (398a, 398b) der Gesprächspartner der Konferenzschaltung umfasst, und mindestens eine Umschaltfläche (398c), die das mobile Endgerät (100) in einen Privatgesprächsmodus mit einem der Gesprächspartner der Konferenzschaltung umschaltet.

3. Verfahren nach Anspruch 2, wobei das Bereitstellen (245) der Privatgesprächsverbindung Folgendes umfasst: Bereitstellen der Privatgesprächsverbindung mit dem Aufrufgesprächspartner, der der Umschaltfläche (398c) entspricht, die einen Eingabetipp (240) erhalten hat.

4. Verfahren nach Anspruch 3, das ferner die Rückschaltung (255) des mobilen Endgeräts (100) in einen Konferenzschaltungszustand umfasst, wenn das mobile Endgerät (100) eine Rückschalteingabe (250) erhält, während die Privatgesprächsverbindung bereitgestellt wird.

5. Verfahren nach Anspruch 1, wobei die Anrufgesprächspartnerliste (392 bis 398) in Listenform angezeigt wird, die einen Bildschirm des mobilen Endgeräts (100) horizontal unterteilt.

6. Verfahren nach Anspruch 5, wobei die Anrufgesprächspartnerliste (392 bis 398) Folgendes umfasst: Identifikationsinformationen (398a, 398b) der Gesprächspartner der Konferenzschaltung, eine Umschaltfläche (398C), die das mobile Endgerät (100) in einen Privatgesprächsmodus mit einem der Gesprächspartner der Konferenzschaltung umschaltet, und eine Beenden-Schaltfläche (398d), die die Privatgesprächsverbindung mit einem der Gesprächspartner der Konferenzschaltung beendet.

7. Verfahren nach Anspruch 1, das ferner das Stoppen (265) einer Bereitstellung der Umschaltschnittstelle (370) umfasst, wenn die Ausrichtung des mobilen Endgeräts (100) von dem Querformat auf ein Hochformat (260) wechselt.

8. Mobiles Endgerät (100), das Folgendes umfasst:
eine Eingabeeinheit (131, 140) zum Empfangen einer Anforderung für eine Konferenzschaltungseingabe (205) und eine Privatgesprächsumschalteingabe (240);
eine Richtungserfassungseinheit (170) zum Erfassen (220, 260) einer Ausrichtung des mobilen Endgeräts (100);
eine Funkfrequenzkommunikationseinheit (110) zum Senden und Empfangen von Daten;
eine Anzeigeeinheit (133) zum Anzeigen einer Benutzerschnittstelle; und
einen Controller (160) zum Bereitstellen einer Konferenzschaltung (215) und zum Bereitstellen (225) einer Benutzerschnittstelle (370) zum Umschalten in einen Privatgesprächszustand während eines Konferenzschaltungszustands, wobei die Benutzerschnittstelle (370) eine Anrufgesprächspartnerliste (392-398) umfasst, die Gesprächspartnern der Konferenzschaltung entspricht, wenn die Richtungserfassungseinheit (170) erfasst (220), dass die Ausrichtung des mobilen Endgeräts (100) während der Konferenzschaltung in ein Querformat wechselt; und Bereitstellen (245) einer Privatgesprächsverbindung mit einem spezifischen Aufrufgesprächspartner, der einem ausgewählten Eintrag aus der Anrufgesprächspartnerliste (392 bis 398) entspricht.

9. Mobiles Endgerät (100) nach Anspruch 8, wobei der Controller (160) die Anrufgesprächspartnerliste (392 bis 398) anzeigt, die Folgendes umfasst: Identifikationsinformationen (398a, 398b) der Gesprächspartner der Konferenzschaltung und eine Umschaltfläche (398C), die das mobile Endgerät (100) in den Privatgesprächszustand mit einem der Gesprächspartner der Konferenzschaltung umschaltet.

10. Mobiles Endgerät (100) nach Anspruch 9, wobei der Controller (160) die Privatgesprächsverbindung mit dem Aufrufgesprächspartner bereitstellt (245), der der Umschaltfläche (398c) entspricht, die aktiviert wurde.

11. Mobiles Endgerät (100) nach Anspruch 10, wobei der Controller (160) das mobile Endgerät (100) in den Konferenzschaltungszustand zurückschaltet (255), wenn die Eingabeeinheit (131, 140) während des Privatgesprächszustand eine Rückschalteingabe (250) erhält.

12. Mobiles Endgerät (100) nach Anspruch 8, wobei die Anrufgesprächspartnerliste (392 bis 398) in Listenform angezeigt wird, die einen Bildschirm des mobilen Endgeräts (100) horizontal unterteilt.

13. Mobiles Endgerät (100) nach Anspruch 12, wobei die Anrufgesprächspartnerliste (392 bis 398) Folgendes umfasst: Identifikationsinformationen (398a, 398b) der Gesprächspartner der Konferenzschaltung, eine Umschaltfläche (398C), die das mobile Endgerät (100) in die Privatgesprächsverbindung mit einem der Gesprächspartner der Konferenzschaltung umschaltet, und eine Beenden-Schaltfläche (398d), die die Privatgesprächsverbindung mit einem der Gesprächspartner der Konferenzschaltung beendet (235).

14. Mobiles Endgerät (100) nach Anspruch 8, wobei der Controller (160) eine Bereitstellung der Umschaltschnittstelle (370) stoppt (265), wenn die Richtung des mobilen Endgeräts (100) von dem Querformat auf ein Hochformat (260) wechselt.

## Revendications

1. Un procédé de commutation au cours d'un mode d'appel dans un terminal mobile (100), le procédé comprenant :
la fourniture d'une audioconférence (215),
la fourniture (225) d'une interface de commutation (370) pour une commutation vers un appel privé, l'interface de commutation (370) comprenant une liste de contreparties d'appel (392-398) correspondant à des contreparties de l'audioconférence lorsqu'une orientation du terminal mobile (100) passe vers une orientation paysage au cours de l'audioconférence (220), et
la fourniture (245) d'une connexion d'appel privé avec une contrepartie d'appel correspondant à un élément sélectionné dans la liste de contreparties d'appel (392-398).

2. Le procédé selon la Revendication 1, où la fourniture (225) d'une interface de commutation (370) comprend l'affichage de la liste de contreparties d'appel (392-398) comprenant des informations d'identification (398a, 398b) des contreparties de l'audioconférence et d'au moins un bouton de commutation (398c) commutant le terminal mobile (100) vers un mode d'appel privé avec une des contreparties de l'audioconférence.

3. Le procédé selon la Revendication 2, où la fourniture (245) de la connexion d'appel privé comprend la fourniture de la connexion d'appel privé avec la contrepartie d'appel correspondant au bouton de commutation (398c) qui a reçu une dérivation en entrée (240).

4. Le procédé selon la Revendication 3, comprenant en outre le renvoi (255) du terminal mobile (100) vers un état d'audioconférence lorsque le terminal mobile (100) reçoit une entrée de retour (250) pendant la fourniture de la connexion d'appel privé.

5. Le procédé selon la Revendication 1, où la liste de contreparties d'appel (392-398) est affichée sous la forme d'une liste divisant horizontalement un écran du terminal mobile (100).

6. Le procédé selon la Revendication 5, où la liste de contreparties d'appel (392-398) comprend des informations d'identification (398a, 398b) des contreparties de l'audioconférence, un bouton de commutation (398c) commutant le terminal mobile (100) vers un mode d'appel privé avec une des contreparties de l'audioconférence et un bouton de fin (398d) qui termine la connexion d'appel privé avec une des contreparties de l'audioconférence.

7. Le procédé selon la Revendication 1, comprenant en outre l'arrêt (265) d'une fourniture de l'interface de commutation (370) lorsque l'orientation du terminal mobile (100) passe de l'orientation paysage à une orientation portrait (260).

8. Un terminal mobile (100) comprenant :
une unité d'entrée (131, 140) destinée à la réception d'une demande pour une entrée d'audioconférence (205) et une entrée de commutation vers un appel privé (240),
une unité de détection de direction (170) destinée à la détection (220, 260) d'une orientation du terminal mobile (100),
une unité de communication par radiofréquence (110) destinée à l'émission et à la réception de données,
une unité d'affichage (133) destinée à l'affichage d'une interface utilisateur, et
un dispositif de commande (160) destiné à la fourniture d'une audioconférence (215) et à la fourniture (225) d'une interface utilisateur (370) destinée à une commutation vers un état d'appel privé au cours d'un état d'audioconférence, l'interface utilisateur (370) comprenant une liste de contreparties d'appel (392-398) correspondant à des contreparties de l'audioconférence lorsque l'unité de détection de direction (170) détecte (220) que l'orientation du terminal mobile (100) est passée vers une orientation paysage au cours de l'audioconférence, et la fourniture (245) d'une connexion d'appel privé avec une contrepartie d'appel spécifique correspondant à un élément sélectionné dans la liste de contreparties d'appel (392-398).

9. Le terminal mobile (100) selon la Revendication 8, où le dispositif de commande (160) affiche la liste de contreparties d'appel (392-398) contenant des informations d'identification (398a, 398b) des contreparties de l'audioconférence et un bouton de commutation (398c) commutant le terminal mobile (100) vers l'état d'appel privé avec une des contreparties de l'audioconférence.

10. Le terminal mobile (100) selon la Revendication 9, où le dispositif de commande (160) fournit (245) la connexion d'appel privé avec la contrepartie d'appel correspondant au bouton de commutation (398c) qui a été activé.

11. Le terminal mobile (100) selon la Revendication 10, où le dispositif de commande (160) renvoie (255) le terminal mobile (100) vers l'état d'audioconférence lorsque l'unité d'entrée (131, 140) reçoit une entrée de retour (250) au cours de l'état d'appel privé.

12. Le terminal mobile (100) selon la Revendication 8, où la liste de contreparties d'appel (392-398) est affichée sous la forme d'une liste divisant horizontalement un écran du terminal mobile (100).

13. Le terminal mobile (100) selon la Revendication 12, où la liste de contreparties d'appel (392-398) comprend des informations d'identification (398a, 398b) des contreparties de l'audioconférence, un bouton de commutation (398c) commutant le terminal mobile (100) vers la connexion d'appel privé avec une des contreparties de l'audioconférence et un bouton de fin (398d) qui termine (235) la connexion d'appel privé avec une des contreparties de l'audioconférence.

14. Le terminal mobile (100) selon la Revendication 8, où le dispositif de commande (160) arrête (265) une fourniture de l'interface de commutation (370) lorsque la direction du terminal mobile (100) passe de l'orientation paysage à une orientation portrait (260).
